# EUROPEAN PATENT APPLICATION

(11) **EP 4 752 804 A1**
(43) Date of publication of application: **03.06.2026**
(21) Application number: 25217748.0
(22) Date of filing: 21.11.2025
(51) Int. Cl.: G06Q 10/10, H04L 51/02

(54) **METHOD AND SYSTEM FOR PROVIDING SOFTWARE SERVICES VIA THE INTERNET BY MEANS OF A USER INTERFACE INTEGRATED INTO AN INSTANT MESSAGING AND COMMUNICATION SOFTWARE APPLICATION**

(30) Priority: 28.11.2024 IT 202400026907
(71) Applicant: Candy Hoover Group S.r.l., 20861 Brugherio-Monza e Brianza (IT)
(72) Inventor: GANZAROLI, Ruben Marco, 20861 Brugherio-Monza e Brianza (IT)
(74) Representative: Brunazzi, Stefano

(57) **Abstract**

A computer-implemented method is described for providing software services via the Internet by means of a user interface integrated into an instant messaging and communication software application.

The method comprises a step of providing an interface application, developed and operating in the context of an instant messaging and communication software application. The interface application is operatively connected to a BOT service to provide the user with an interface function of the chat type, integrated into the user interface of said instant messaging and communication software application.

The method then comprises the steps of inserting, by a user, by means of the interface application, a user input comprising at least one request relating to a software service accessible via the Internet, processing the user input by means of the BOT service, managing, by a conversation management application operatively connected to the interface application, a step of understanding the user input, for interpreting said at least one request provided as input by the user and processed by the BOT service, and for mapping said at least one request into a respective specific intent.

The method then comprises the steps of receiving the specific intent by a programmatic interface for specific processing services, operatively connected to the conversation management application; and triggering a specific action, associated with the specific intent received, by said programmatic interface. Said action is a calling function to a respective specific processing service, corresponding to the software service requested by the user and/or an indication function indicating one or more specific tasks requested. The method then provides for receiving the specific action by a fulfilment application, comprising an execution application or program or software module or a logical execution component, wherein said fulfilment application is operatively connected to said programmatic interface.

The method finally provides for the steps of delivering, by the fulfilment application, the requested software service and/or one or more specific tasks requested, based on the action received; and providing the user with the requested software service and/or one or more specific tasks requested, by means of said interface application integrated into the instant messaging and communication software application.

A system is also described, capable of executing the aforesaid method.

## Description

### TECHNICAL BACKGROUND OF THE INVENTION

### Field of application.

The present invention generally concerns the technical field of providing software services via the Internet.

More specifically, the invention concerns a computer-implemented method and a system for providing software services via the Internet by means of a user interface integrated into an instant messaging and communication software application.

### Description of the prior art.

It is well known that, among the services accessible via computer, particular importance and diffusion are observed with reference to both virtual meeting services, interactive audio-conferencing or video-conferencing and instant messaging services, on the one hand, and Artificial Intelligence-based services, on the other.

From the point of view of implementation and modes of use via computer, these services are today completely decoupled, since they are provided through completely different software tools and programs, and by means of interfaces that are different and entirely independent from one another. One may consider, for instance, the interfaces for video conferencing via computer provided by widely used tools, such as Microsoft Teams^{®} or Google Meet^{®} or others, on the one hand, and chat-type interfaces such as ChatGPT^{®} on the other hand.

From a functional point of view, however, it would be desirable to have more integrated interfaces, for example to consult an Artificial Intelligence service during a virtual video conferencing meeting.

More generally, even beyond the examples mentioned above, there is a particularly felt need for effective and easy access to software services offered via the Internet, such that it may be integrated into, and used concurrently with, instant messaging and communication software applications.

As far as known to the Applicant, such need - which is increasingly felt given the growing and now widespread diffusion of the two aforementioned types of service - is not satisfied by commercially available or otherwise known solutions.

### SUMMARY OF THE INVENTION.

It is an object of the present invention to provide a computer-implemented method for providing software services via the Internet by means of a user interface integrated into an instant messaging and communication software application, which may overcome at least partially the drawbacks complained of above with reference to the known art, and meet the above-mentioned needs that are particularly felt in the considered technical field.

This object is achieved by a method for providing software services via the Internet by means of a user interface integrated into an instant messaging and communication software application in accordance with claim 1.

Further embodiments of said method are defined in claims 2 to 13.

It is also an object of the present invention to provide a system for providing software services via the Internet by means of a user interface integrated into an instant messaging and communication software application, capable of executing the above-mentioned method.

This object is achieved by a system in accordance with claim 14.

A further embodiment of said system is defined in claim 15.

### BRIEF DESCRIPTION OF THE DRAWINGS.

Further features and advantages of the method and system for providing software services via the Internet by means of a user interface integrated into an instant messaging and communication software application, according to the invention, will become apparent from the following description of preferred embodiments, provided by way of non-limiting example, with reference to the accompanying figures:
- Figure 1 is a simplified block diagram illustrating the software components by means of which the method of the present invention is carried out, according to one embodiment;
- Figure 2 is an example of a display of the user interface provided in an embodiment of the method according to the present invention;
- Figure 3 shows, by way of example, a screen made available by the user interface, during interaction with the user, according to an embodiment of the method of the present invention.

### DETAILED DESCRIPTION.

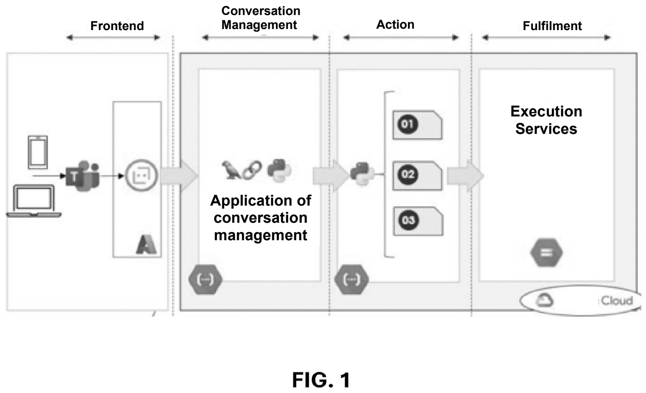

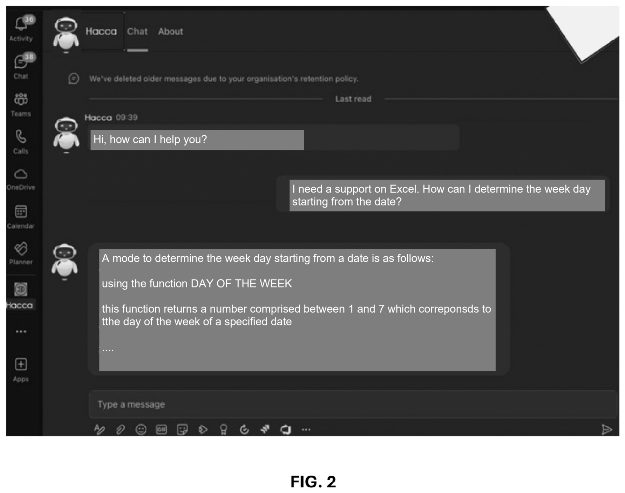

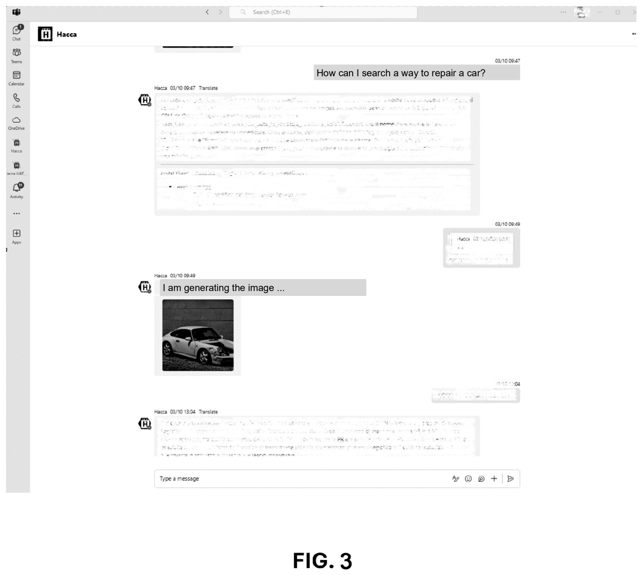

A computer-implemented method for providing software services via the Internet by means of a user interface integrated into an instant messaging and communication software application will be described in more detail below, with reference to figures 1-3.

The method first comprises a step of providing an interface application, developed and operating in the context of an instant messaging and communication software application.

Said interface application is operatively connected to and/or interacting with a BOT service to provide the user with an interface function of the chat type, integrated into the user interface of said instant messaging and communication software application.

The method then comprises the steps of inserting, by a user, by means of said interface application, a user input comprising at least one request relating to a software service accessible via the Internet; and processing the user input by means of said BOT service.

The method then provides for managing, by a conversation management application operatively connected to the interface application, a step of understanding the user input, for interpreting said at least one request provided as input by the user and processed by the BOT service, and for mapping said at least one request into a respective specific intent.

The method then comprises the steps of receiving said specific intent by a programmatic interface for specific processing services (also called, hereinafter, as "action interface"), operatively connected to the conversation management application; and triggering a specific action, associated with the specific intent received, by the programmatic interface for specific processing services (i.e., action interface).

Said action is a calling function to a respective specific processing service, corresponding to the software service requested by the user and/or an indication function indicating one or more specific tasks requested.

The method then provides for a step of receiving said specific action by a fulfilment application, operatively connected to the programmatic interface for specific processing services.

Said fulfilment application comprises an execution application or program or software module or a logical execution component.

Finally, the method provides for the steps of delivering, by the fulfilment application, the software service requested and/or one or more specific tasks requested, based on the action received; and providing the user with the requested software service and/or one or more specific tasks requested, by means of said interface application integrated into the instant messaging and communication software application.

According to one embodiment of the method, the instant messaging and communication software application is a messaging service, comprising instant messaging apps and/or webchat and/or conference call/group chat tools.

According to another embodiment of the method, the instant messaging and communication software application comprises an online virtual meeting tool and/or a conference call/group chat tool.

In accordance with one embodiment of the method, the aforesaid BOT service is supported by a BOT service provision application, configured to interact with the aforesaid interface application.

In accordance with one embodiment of the method, the interface application, the instant messaging and communication software application, and the BOT service provision application are integrated into a front-end software component.

According to one implementation option of said embodiment, the front-end software component comprises:
- Microsoft Teams^{®} as the instant messaging and communication software application;
- a proprietary application developed and published in the Teams software environment, as the interface application;
- AzureBOT as the BOT service provision application.

In this case, the user uses Microsoft Teams^{®} as the entry point for executing the method, and in particular to engage in a chat with the aforesaid proprietary interface application.

According to other possible implementation options, the method employs, as the instant messaging and communication software application, other tools, such as for example Skype^{®}, Facebook Messenger^{®}, Telegram^{®}, WhatsApp^{®}, Slack^{®}, and the like.

The proprietary interface application (for example, an application developed by the Applicant, as a proprietary App belonging to the "Microsoft Teams" environment) allows interaction with Microsoft Teams^{®} in a "private conversation" mode, and is searchable in the top search bar.

The BOT service provision application "AzureBOT^{®}" (used in this example) is a logical interface configured to provide, through the Microsoft Teams Channel, a ChatBot developed in the "Microsoft Bot Framework".

In this embodiment, the method allows the definition of appropriate specific configurations, in order to connect Azure BOT with Microsoft Teams^{®}, thereby obtaining the aforesaid proprietary interface, which appears as a regular chat window, connected to the underlying Azure BOT service for sending and receiving messages.

In other words, in this embodiment, an "Azure BOT^{®}" service integrated within Microsoft Teams^{®} is used, which allows the creation of BOTs usable from Microsoft Teams^{®}, which is configured to interact with Azure BOT, which in turn is configured to "hook" the code developed by the Applicant for the proprietary interface.

In accordance with one embodiment of the method, the aforesaid specific processing service, or software service requested by the user, comprises any software service of a "Software-Vendor" accessible via the Internet, or any custom service specifically developed at a customer's request.

According to one implementation option of the method, the aforesaid specific processing service, or software service requested by the user, comprises an Artificial Intelligence service.

According to another implementation option of the method, the aforesaid specific processing service, or software service requested by the user, comprises a "machine-translation" service.

With reference to the aforesaid conversation management application (i.e., "Conversation Management", it is noted that according to an implementation example, it manages a step of "understanding", interpreting the user input and mapping it to specific intents.

According to one implementation option, such function is performed remotely, typically in a Cloud Platform, by a program or module or software application for conversation management, suitably configured to interact with the aforesaid front-end application.

The conversation management application has been developed ad hoc by the Applicant, and the related software code is of the "custom" type, although it can be advantageously executed on available hardware (for example, by Google).

According to one implementation option, said "custom" software code is based on open-source components such as Python libraries (as will be described in greater detail below) and is developed ad hoc to manage the conversation via a "virtual agent" capable of mapping the user requests to specific "tools", namely code functions that trigger specific processing, i.e., the "actions".

According to one implementation option, the expiration of ephemeral conversations is managed, for secure data processing without critical impacts, and consent collection is managed.

According to one implementation option, the "Conversation Management" enables differentiated management of the possible usable actions, for example based on specific user accounts or specific user groups.

In accordance with one embodiment of the method, the aforesaid conversation management application (Conversation Management) and the aforesaid programmatic interface for specific processing services (i.e., "Action" interface) are implemented by means of a software component for the delivery of software applications in "serverless" mode, i.e., without specific provisioning of machine/hardware resource instances, with the activation of the necessary resources entirely managed in "cloud" mode.

According to different possible implementation options of this embodiment, the aforesaid software component for the delivery of software applications in serverless mode is "Google Cloud Function^{®}", or "AWS Lambda Function^{®}", or "Azure Function^{®}".

According to other possible implementation options, the aforesaid software component for the delivery of software applications comprises custom-developed software components or components made available by other external providers.

According to one embodiment of the method, the aforesaid conversation management application interacts with a conversational database which stores and tracks all user interactions with the user interface.

According to one implementation option, the aforesaid conversational database is Google Conversational Memory DB^{®}.

According to other possible implementation options, the aforesaid conversational database is a relational database, such as for example AlloyDB for PostgreSQL, Cloud SQL, Big Query, No SQL such as Bigtable, Memorystore, Mongo DB Atlas, Datastax, Redis Labs, Neo4j.

According to one implementation option, the aforesaid conversation management application further comprises a software tool for configuring the expiration dates of the content of rows contained in the aforesaid conversational database, for the automatic management of the deletion of old rows from the database.

In accordance with one embodiment of the method, the aforesaid "intent" is a digital entity representative of a class and/or category which, from a logical/functional point of view, represents an operation and/or function associated with the user request, among the operations and/or functions managed by the BOT service via chat interface.

The intent is therefore a sort of "intent/purpose/goal" of the user's input communication. This definition falls within the broader field of "Natural Language Understanding", i.e., "understanding of natural language requests". Essentially, it is a process of classification/ categorization, in which "intents" are classes/categories that, from a logical/functional point of view, represent the operations/functions managed by the "chatbot".

For example, the intent "Image Generation" could be a classification label which, when applied to the user's request, is passed as input to the specific image generation tool.

According to one implementation option, the intent is implemented by means of custom Python code based on the LangChain library, which provides some code/function packages ready to be imported into the application, such as:
- "0/few-shot" intent classification (i.e., by means of natural language instructions and very few examples to the Large Language Model);
- "Prompt Engineering" of a virtual agent that uses a "chain of thought" to manage its reasoning in a structured manner and then selects a specific tool to carry out the subsequent related "action" and activate the correct "execution" component.

In accordance with one embodiment of the method, the aforesaid "action", is a code function that performs a specific task, among which the role of "virtual agent" acting as "conversation orchestrator" is fundamental, ensuring the possibility of conversational interaction in support of the "Conversation Management".

It is noted that most actions initiate interaction with respective execution components. However, some actions are resolved without activating execution components, for example actions that handle ambiguous requests and present the user with a selection of buttons to direct the interaction.

To ensure maximum granularity of access to actions based on user visibility permissions, according to one implementation option, specific users or user groups may have specific differentiated access to specific actions.

According to one implementation option, the aforesaid step of managing an understanding of the user input is based on "LangChain" Agents.

According to another implementation option, the aforesaid step of managing an understanding of the user input is based on "Large Language Models".

According to other possible implementation options, the aforesaid step of managing an understanding of the user input is based on a custom RAG (Retrieval-Augmented Generation) solution, or on other solutions known per se.

Although the concepts of "LangChain" Agents and "Large Language Models" are known to the experts in the field, some exemplary information is provided below.

A generative Artificial Intelligence agent is a software code function that sends requests to external generative services (although some services also offer the agent as a "ready-to-use" service), in a structured way, highly integrated with contextual elements and specific IT or generative tools for following specific tasks. For example, in the implementation of the agent, some aspects have been taken into consideration, including the specific operational context, general instructions for interaction, the tone of voice to adopt, an inventory of products or services, guidelines for answering questions, support documentation on which to base the answers, examples of previous conversations, guidelines for new conversations.

LangChain is merely a code library that includes some ready-to-use functions that can be employed for the purposes indicated above.

"Large Language Models" are complex mathematical models embedded in neural networks based on "transformers" architecture, which are capable of "understanding" language, i.e., of transforming textual requests into a mathematical representation that can be processed and understood by the neural network algorithm, and of generating an answer first in "mathematical" form and then converted into textual answer.

Such models are large in size, trained on enormous amounts of data, and each input is represented by billions of numbers that denote deep specific features of the meaning of the textual input.

For this reason, through a mechanism known as "transfer learning", it is possible to ask these models to perform tasks in a dialogic/conversational form based on natural language instructions, instead of necessarily training a model from scratch.

The set of software functions therefore configures, by means of "prompts" or "instructions", the way in which the agent must manage the conversation and the related resulting operations.

With reference to the aforesaid fulfilment application, it is noted that, according to one embodiment of the method, it is a queryable external service that provides the processing services.

According to one embodiment, the aforesaid fulfilment application comprises a logical execution component that refers to Artificial Intelligence models and/or services which perform the requested task.

According to various implementation options, the execution components may be diverse and numerous, among which at least one Generative Artificial Intelligence (Generative AI) component is required to provide the basic support for conversational interaction.

According to various implementation options, said execution components may be external or internal, they may be AI/GenAI tools or third-party services to be integrated with the solution to perform specific tasks, they may be custom-developed components, and in any case they are not specific technological dependencies (for example, for GenAl various services may be used, such as Google Gemini^{®}, Azure OpenAI^{®}, AWS Bedrock^{®}), or even personalised/private solutions.

Moreover, for the execution of specific use cases, ad hoc tools may be integrated, such as a "Machine Translator" from external services like Google Translate^{®} if one of the possible intents/actions is translation, or a ticket/issue tracking system like "Service Now^{®}", if one of the use cases implies the possibility to automatically open reports, and so on. The possibility to have such various tools available in conversational form without dependence on a specific vendor or products is a particularly advantageous aspect of this solution.

In accordance with one embodiment, the aforesaid fulfilment application is associated with a service from the Google Vertex^{®} Al service family, comprising one or more of the following services/applications: Google Gemini^{®} and/or Google Vector Search^{®} and/or Google Imagen^{®} and/or Embedding^{®} and/or Google Cloud Storage^{®}.

According to other possible implementation options of said embodiment, the aforesaid execution application is associated with other services, of the "custom" type or made available by other external service providers.

Although the aforesaid services and applications are known to the expert in the field, some exemplary information is provided below.

The "Google Gemini^{®}" family of "Large Language Models" provides "Generative AI" functionality for generic-purpose request use cases.

"Google Imagen^{®}" is the image generation "feature" of Vertex^{®} AI, and provides the ability to generate new images and to edit images based on textual "prompts", or to edit only parts of images using a mask area.

The embedding/encoding (or "Embedding") service transforms textual inputs into numerical/mathematical representations in the form of multi-dimensional vectors (from about 800 dimensions upwards, depending on the language model used). The role of this service is therefore that of an "encoder", aimed at providing a mathematical encoding representative of the meaning contained in the input texts.

"Vector Search^{®}" is Google's solution for semantic search based on "Large Language Models vector embeddings", which are high-dimensional numerical encodings of texts. It is mainly used to power the knowledge base question-and-answer use case. It is a fully managed service, although it is possible to customise specific partition dimensions and VM models to be used; in general, no active management or configuration is required. This means that Google handles the underlying infrastructure, including scaling, maintenance, and patching. Thus, it is possible to focus on building the application and use vector search to find similar items within the data without worrying about server or software management.

Google Cloud Storage^{®} (execution component) is used to provide background data to the knowledge base question-and-answer use case. The vector search database may be based on the data stored therein.

In accordance with another embodiment of the method, the aforesaid execution application comprises one or more of the following services/applications: OpenAI GPT^{®} and/or Open Search^{®} and/or ElasticSearch^{®} and/or AWS Bedrock^{®}.

According to one embodiment, the aforesaid fulfilment application comprises any computing service queryable by an Application Programming Interface, "API", to perform specific tasks (for example, "Service Now^{®}" for automatic opening of tickets or reports, or even Office365^{®} for automatic sending of emails, and so on).

In accordance with one embodiment of the method, the aforesaid step of providing the user with the requested software service and/or one or more specific tasks requested comprises:
- providing, as an answer, the requested software service and/or one or more specific tasks requested by the fulfilment application, to the conversation management application;
- processing said answer by the conversation management application and sending the processed answer to the front-end software component;
- based on the processed answer of the conversation management application, providing the service to the user by the front-end software component by means of a user computer on which said instant messaging and communication software application is executed.

According to one embodiment of the method, access to the chatbot user interface does not require specific authentication, but is enabled by a prior authentication performed by the user to access the instant messaging and communication software application.

According to one implementation option, through said single authentication ("sign-on"), the method provides for the possibility to enable or disable specific use cases depending on the individual user who has authenticated, or the user group to which said user belongs.

In accordance with one embodiment, the method is applied to a general-purpose request use case, which consists of a text-only interaction flow with requests and follow-up interactions.

In accordance with another embodiment, the method is applied to a Knowledge Base Q&A use case, which consists of a text-only interaction flow with additional follow-up requests and interactions on the conversation flow, and wherein the answers are based on an underlying database of data and documents.

According to another embodiment, the method is applied to an image generation use case which consists of multimodal interactions, comprising textual and graphical contents.

According to one implementation option, the user may request the generation of an image and may also proceed with further requests regarding the previously provided images and request modifications and customisations.

The three above-mentioned use cases differ greatly in terms of the potential and actual involvement of other systems/modules and backend services.

The general-purpose request use case does not involve any interaction with other systems and only reaches the "Generative AI" model (Gemini^{®}) to generate meaningful answers.

The "knowledge base Q&A" use case may involve integration with a limited set of company documents that are acquired once and made available to the vector search database.

The image generation use case does not involve any interaction with other systems and only reaches the Generative Al model "Image 2" to generate meaningful images.

Described below, with reference to figure 1, is a system for providing software services via the Internet by means of a user interface integrated into an instant messaging and communication software application.

Said system comprises a plurality of electronic processors and/or computers and/or servers, operatively connected to one another via the Internet or another telecommunications network and capable of interoperating, in which the following applications or programs or software modules are stored and executable:
- an interface application, developed and operating in the context of an instant messaging and communication software application; said interface application is operatively connected to and/or interacting with a BOT service to provide the user with an interface function of the chat type, integrated into the user interface of the instant messaging and communication software application; said interface application is configured to allow a user to enter a user input comprising at least one request relating to a software service accessible via the Internet; the aforesaid BOT service is configured to process the user input;
- a conversation management application operatively connected to the aforesaid interface application, configured to manage a step of understanding the user input, for interpreting the at least one request provided as input by the user and processed by the BOT service, and for mapping said at least one request into a respective specific intent;
- a programmatic interface for specific processing services, i.e., an "action interface", operatively connected to the aforesaid conversation management application, to receive said specific intent; the action interface is configured to trigger a specific action associated with the specific intent received; said action is a calling function to a respective specific processing service, corresponding to the software service requested by the user and/or an indication function indicating one or more specific tasks requested;
- a fulfilment application, operatively connected to the aforesaid programmatic interface for specific processing services, to receive said specific action; the fulfilment application comprises an execution application or program or software module or a logical execution component; the fulfilment application is configured to deliver the requested software service and/or one or more specific tasks requested, based on the action received; furthermore, the fulfilment application and the conversation management application are configured to provide the user with the requested software service and/or one or more specific tasks requested, by means of said interface application integrated into the instant messaging and communication software application.

According to one embodiment of the system, the interface application, the conversation management application, the programmatic interface for specific processing services and the fulfilment application are implemented by means of a plurality of programs or software modules, stored and executable in said electronic processors and/or computers and/or servers, remote from and operatively connected to one another, according to different possible functional partitions, and/or in a distributed manner and/or by means of cloud-based solutions.

According to various possible embodiments, the system is configured to perform a method according to any one of the previously described embodiments of the method.

With further reference to figures 1-3, some additional information is reported below and detailed descriptions are presented of certain particular embodiments of the method and system according to the present invention, by way of non-limiting example.

According to one embodiment, the method is structured in the following steps:
Step 1: the user opens Microsoft Teams^{®} and selects (or searches for via the search bar) the interface application developed in the Microsoft Teams^{®} environment.
Step 2 (conditionally activated): upon the first session interaction, the ChatBot provides a welcome message including a legally relevant disclaimer to inform the user about data processing policies and/or to collect implicit "opt-out" confirmation for data usage. If the user proceeds by using the ChatBot after reading the disclaimer, such action by the user is considered implicit consent to proceed.
Step 3: the user enters input requests through the private conversation interface of the interface application.
Step 4: the chatbot considers the contextual memory provided (for example, up to 1 hour of previous interactions stored in a conversation history database) and responds accordingly with textual or image content.
Step 5: the user continues to converse with the ChatBot.

With reference to authentication/security aspects, some additional exemplary information is provided below, relating to particular implementation options of the method of the present invention.

### Authentication

- Authentication of the user application: authentication is not explicitly performed by the solution, but directly leverages the authentication of the Microsoft Teams^{®} application, which is propagated through the Azure Bot^{®} configuration.
- Authentication between Google Cloud Platform^{®} (GCP) services: the Google Cloud^{®} orchestration function, involved in managing and acting on conversations, is the main entry point of the GCP environment within the overall architecture. The function running on it is authenticated to access and use other Google services that rely on Identity and Access Management (IAM).

The IAM system enables administrators to authorize who can act on specific Google Cloud^{®} resources, providing full control and visibility to centrally manage Google Cloud^{®} resources. Roles, permissions, and, in general, access and control of other services can be granted to actual user accounts or service accounts. Applications use service accounts to make authorized API calls by authenticating either as the service account itself or as Cloud Identity users via domain-wide delegation. When an application authenticates as a service account, it has access to all resources for which the service account is authorized.

In the situation of the solution described herein, which involves multiple Google services interacting with one another, one service calls another service directly via HTTP using the URL of its endpoint. For this situation, ensuring that each service is only able to make requests to specific services is the most secure option possible. For example, the Google Cloud Function^{®}, which performs conversation management and action logic blocks, should have access to services such as Gemini^{®}, Imagen^{®}, and Vector Search^{®}, but not to others (e.g., Google Cloud Storage^{®}).

### Encryption:

- Encryption of the Azure Al BOT service: the Azure BOT^{®} service automatically encrypts data to protect data and meet the organisation's security and compliance requirements. The standard data encryption policies provided by Azure are used. This approach involves the use of default encryption keys, natively managed and maintained by Azure.
- Google Cloud Encryption^{®}: Google encrypts all customer content stored at rest, without any specific custom modification/implementation within the application code, using one or more encryption mechanisms. Google renders the data unreadable during transit to keep it private. Therefore, standard encryption policies provided by Google are used, based on encryption keys managed by Google.

As can be seen, the objects of the present invention are achieved by the method and the system described above.

Indeed, based on the foregoing, it is clear that the solution provided by the present invention advantageously enables the provision of an access interface to software services available via the Internet, integrated into an instant messaging and communication software application.

In particular, according to a typical implementation example, the technical solution illustrated in the present description provides a chat-type interface for access to Artificial Intelligence services within a standard interface of a tool known per se and widely used for virtual meetings or interactive video conferences.

By virtue of this, the technical solution of the present invention meets the above-mentioned need to have effective and easy access to software services offered via the Internet such that it is integrated into, and usable concurrently with, instant messaging and communication software applications.

To the embodiments of the method and system for providing software services via the Internet by means of a user interface integrated into an instant messaging and communication software application, described above, a person skilled in the art may, to meet contingent needs, make modifications, adaptations, and replacements of elements with others functionally equivalent, also in combination with the known art, also creating hybrid implementations, without departing from the scope of the following claims. Each of the features described as belonging to a possible embodiment may be implemented independently of the other described embodiments.

It is further noted that the term "comprising" does not exclude other elements or steps, and the term "a" or "one" does not exclude a plurality.

## Claims

1. A computer-implemented method for providing software services via the Internet by means of a user interface integrated into an instant messaging and communication software application, comprising:
- providing an interface application, developed and operating in the context of an instant messaging and communication software application, said interface application being operatively connected to and/or interacting with a BOT service to provide the user with an interface function of the chat type, integrated into the user interface of said instant messaging and communication software application;
- inserting by a user, by means of said interface application, a user input comprising at least one request relating to a software service accessible via the Internet;
- processing the user input by means of said BOT service;
- managing, by a conversation management application operatively connected to said interface application, a step of understanding the user input, for interpreting said at least one request provided as input by the user and processed by the BOT service, and for mapping said at least one request into a respective specific intent;
- receiving said specific intent by an action interface, i.e., a programmatic interface for specific processing services, operatively connected to said conversation management application;
- triggering a specific action, associated with the specific intent received, by the action interface, said action being a calling function to a respective specific processing service, corresponding to the software service requested by the user and/or an indication function indicating one or more specific tasks requested;
- receiving said specific action by a fulfilment application, operatively connected to said action interface, said fulfilment application comprising an execution application or execution program or execution software module or a logical execution component;
- delivering, by the fulfilment application, the requested software service and/or one or more specific tasks requested, based on the action received;
- providing the user with the requested software service and/or one or more specific tasks requested, by means of said interface application integrated into an instant messaging and communication software application.

2. A method according to claim 1, wherein the instant messaging and communication software application is a messaging service, comprising instant messaging apps and/or webchats and/or conference call or group chat tools.

3. A method according to claim 1, wherein the instant messaging and communication software application comprises an online virtual meeting tool and/or a conference call/group chat tool.

4. A method according to any one of the preceding claims, wherein said BOT service is supported by a BOT service provision application, configured to interact with said interface application,
and/or wherein said interface application, instant messaging and communication software application and BOT service provision application are integrated into a front-end software component.

5. A method according to any one of the preceding claims, wherein said interface application, instant messaging and communication software application and BOT service provision application are integrated into a front-end software comprising:
- Microsoft Teams^{®} as the instant messaging and communication software application;
- a proprietary application developed and published in the Teams software environment, as the interface application;
- AzureBOT^{®} as the BOT service provision application.

6. A method according to any one of the preceding claims, wherein said specific processing service, or software service requested by the user, comprises any software service of a "Software-Vendor" accessible via the Internet, or any custom service specifically developed at a customer's request,
or wherein said specific processing service, or software service requested by the user, comprises an Artificial Intelligence service,
or wherein said specific processing service, or software service requested by the user, comprises a "machine-translation" service.

7. A method according to any one of the preceding claims, wherein said conversation management application interacts with a conversational database which stores and tracks all the user interactions with the user interface,
or wherein said conversation management application interacts with Google Conversational Memory DB which stores and tracks all the user interactions with the user interface,
or wherein said conversation management application further comprises a software tool for configuring the expiration dates of the content of rows contained in a conversational database storing and tracking all the user interactions with the user interface, and interacting with said conversation management application, for the automatic management of the deletion of old rows from the database.

8. A method according to any one of the preceding claims, wherein said intent is a digital entity representative of a class and/or category which represents, from a logical/functional point of view, an operation and/or function associated with the user request, among the operations and/or functions managed by the BOT service via chat interface,
and/or wherein said step of understanding the user input is based on "LangChain" Agents or on "Large Language Models".

9. A method according to any one of the preceding claims, wherein said conversation management application and said action interface are implemented by means of a software component for the delivery of software applications in a "serverless" mode with the activation of the necessary resources entirely managed in a cloud mode,
wherein said software component for the delivery of software applications in the "serverless" mode is, for example, "Google Cloud Function^{®}", or "AWS Lambda Function^{®}", or "Azure Function^{®}".

10. A method according to any one of the preceding claims, wherein said fulfilment application is a queryable external service which provides the processing services,
and/or wherein said fulfilment application comprises a logical execution component which refers to Artificial Intelligence models and/or services which perform the requested task,
and/or wherein said fulfilment application is associated with a service from the Google Vertex^{®} AI service family, comprising one or more of the following services/ applications: Google Gemini^{®} and/or Google Vector Search^{®} and/or Google Imagen^{®} and/or Embedding^{®} and/or Google Cloud Storage^{®},
and/or wherein said fulfilment application comprises one or more of the following services/applications: OpenAI GPT^{®} and/or Open Search^{®} and/or ElasticSearch^{®} and/or AWS Bedrock^{®},
and/or wherein said fulfilment application comprises any computing service queryable by an Application Programming Interface, API, to perform specific tasks.

11. A method according to any one of the preceding claims, wherein said interface application, instant messaging and communication software application and BOT service provision application are integrated into a front-end software component, and wherein said step of providing the user with the requested software service and/or one or more specific tasks requested comprises:
- providing as a response the requested software service and/or one or more specific tasks requested by the fulfilment application, to the conversation management application;
- processing said response by the conversation management application and sending the processed answer to the front-end software component;
- based on said processed response of the conversation management application, providing the service to the user by the front-end software component by means of a user computer on which said instant messaging and communication software application is executed.

12. A method according to any one of the preceding claims, wherein access to the chatbot user interface does not require any specific authentication, but is enabled by a prior authentication performed by the user to access the instant messaging and communication software application.

13. A method according to any one of the preceding claims, wherein the method is applied to a general-purpose request use case consisting of a text-only interaction flow with requests and follow-up interactions,
and/or wherein the method is applied to a Knowledge Base Q&A use case, consisting of a text-only interaction flow with additional follow-up requests and interactions on the conversation flow, and wherein the answers are based on an underlying Database of data and documents,
and/or wherein the method is applied to an image generation use case consisting of multimodal interactions, comprising textual and graphical contents.

14. A system for providing software services via the Internet by means of a user interface integrated into an instant messaging and communication software application, comprising a plurality of electronic processors and/or computers and/or servers, operatively connected to one another via the Internet or another telecommunications network and capable of interoperating, in which the following applications or programs or software modules are stored and executable:
- an interface application, developed and acting in the context of an instant messaging and communication software application, said interface application being operatively connected to and/or interacting with a BOT service to provide the user with an interface function of the chat type, integrated into the user interface of said instant messaging and communication software application, said interface application being configured to allow a user to enter a user input comprising at least one request relating to a software service accessible via the Internet, said BOT service being configured to process the user input;
- a conversation management application operatively connected to said interface application, configured to manage a step of understanding the user input, for interpreting said at least one request provided as input by the user and processed by the BOT service, and for mapping said at least one request into a respective specific intent;
- an action interface, i.e., a programmatic interface for specific processing services, operatively connected to said conversation management application, to receive said specific intent, wherein the action interface is configured to trigger a specific action, associated with the specific intent received, said action being a calling function to a respective specific processing service, corresponding to the software service requested by the user and/or an indication function indicating one or more specific tasks requested;
- a fulfilment application, operatively connected to said action interface to receive said specific action, said execution application comprising an execution application or execution program or execution software module or a logical execution component, wherein the fulfilment application is configured to deliver the requested software service and/or one or more specific tasks requested, based on the action received;
wherein the fulfilment application and the conversation management application are configured to provide the user with the requested software service and/or one or more specific tasks requested, by means of said interface application integrated into an instant messaging and communication software application.

15. A system according to claim 14, wherein said interface application, conversation management application, action interface and fulfilment application are implemented by means of a plurality of programs or software modules, stored and executable in said electronic processors and/or computers and/or servers, remote from and operatively connected to one another, according to different possible functional partitions, and/or in a distributed manner and/or by means of cloud-based solutions.
